# EUROPÄISCHE PATENTANMELDUNG

(11) **EP 4 837 762 A2**
(43) Veröffentlichungstag der Anmeldung: **11.11.2026**
(21) Anmeldenummer: 26208094.8
(22) Anmeldetag: 13.11.2023
(51) Int. Cl.: B60K 1/04

(54) **KRAFTFAHRZEUG MIT TRAGSTRUKTUR UND HOCHVOLTBATTERIE**

(30) Priorität: 03.01.2023 DE 102023200042
(62) Dokumentnummer(n) der früheren Anmeldung(en) nach Art. 76 EPÜ: 23209310.4 / 4 397 516
(71) Anmelder: MAGNA STEYR Fahrzeugtechnik GmbH & Co KG, 8041 Graz (AT)
(72) Erfinder: WONISCH, Manfred, 8077 Gossendorf (AT); HAHN, Christian, 86444 Affing (DE)
(74) Vertreter: Zangger, Bernd

(57) **Zusammenfassung**

Ein Kraftfahrzeug umfassend eine Tragstruktur (1, 2), wobei die Tragstruktur (1, 2) zumindest zwei Längsträger (1) und zumindest zwei Querträger (2) umfasst, ferner umfassend eine Hochvoltbatterie in einem Batteriegehäuse (3), wobei die Hochvoltbatterie in einem Raum angeordnet ist, der von den Längsträgern (1) und den Querträgern (2) begrenzt ist, wobei ein Batterierahmenring (4) einstückig zumindest den radial innen liegenden Abschnitt eines Längsträgers (1) und/oder eines Querträgers (2) bildet, vorzugsweise einstückig die radial innen liegenden Abschnitte der beiden Längsträger (1) und/oder der beiden Querträger (2) bildet, wobei der Batterierahmenring (4) zusätzlich zu seiner Funktion als Teil der Tragstruktur (1, 2), einen Teil des Batteriegehäuses (3) für die Hochvoltbatterie ausbildet.

## Beschreibung

### Gebiet der Erfindung

Die vorliegende Erfindung betrifft ein Kraftfahrzeug umfassend eine Tragstruktur und eine Hochvoltbatterie.

### Stand der Technik

Es ist bekannt, dass Kraftfahrzeuge eine Tragstruktur umfassen, die jeweils zumindest zwei Längsträger und zumindest zwei Querträger umfasst. Die zwei Längsträger werden auch als Schweller bezeichnet. Vor und hinter den Querträgern können weitere Längsträger angeordnet sein. Die Längs- und Querträger können als Hohlprofile ausgebildet sein. Auf eine derartige Tragstruktur kann eine Karosserie aufgesetzt sein. Die Tragstruktur und der Aufbau eines Kraftfahrzeugs können auch zu einer Einheit zusammengefasst sein, wobei man dann von einer selbsttragenden Karosserie und von einer Schalenbauweise spricht. Die Tragstruktur kann dabei aus Schalen, insbesondere aus Blechschalen, aufgebaut sein.

Kraftfahrzeuge mit einem elektrischen Antrieb verwenden Hochvoltbatterien zur Bereitstellung der benötigten elektrischen Energie. Für eine höhere Speicherkapazität benötigen die Hochvoltbatterien einen großen Bauraum. Sie können beispielsweise im Bereich des Bodens eines Kraftfahrzeuges, zwischen Längsträgern und Querträgern des Kraftfahrzeuges angeordnet sein.

Aus der DE 10 2019 121682 A1 ist ein Unterbodenmodul für ein Kraftfahrzeug bekannt, umfassend ein linkes Seitenelement und ein rechtes Seitenelement, wobei sich die Seitenelemente entlang einer Längsrichtung erstrecken und endseitig durch Querelemente verbunden sind, wodurch eine obere Kontaktfläche und eine untere Kontaktfläche gebildet sind, wobei an der oberen Kontaktfläche ein Bodenelement angeordnet ist, und wobei an der unteren Kontaktfläche ein Deckelelement angeordnet ist, wodurch zwischen dem Bodenelement und dem Deckelelement ein Anordnungsraum gebildet ist, und wobei das Bodenelement gasdicht angeordnet ist.

Die DE 10 2015 205413 B4 offenbart eine tragende Struktur für ein Fahrzeug, wobei die tragende Struktur mehrere Strukturbauteile umfasst, die einen Aufnahmebereich für ein oder mehrere Energiemodule bilden, wobei die Strukturbauteile im Aufnahmebereich zusammen mit dem einen oder den mehreren Energiemodulen eine Sandwichstruktur bilden, wobei die Strukturbauteile Decklagen eines Kerns der Sandwichstruktur sind, wobei der Kern durch das eine oder die mehreren Energiemodule gebildet ist.

Dokument US 2020/156486 A1 zeigt ein Batteriegehäuse für ein Fahrzeugchassis, umfassend eine Grundplatte mit einer oberen und einer unteren Fläche und einer Vielzahl von Kanten; eine äußere Stützstruktur mit einer oberen Fläche und einer unteren Fläche, wobei sich ein Flanschabschnitt von einer unteren Fläche davon erstreckt, wobei die äußere Stützstruktur auf einer oberen Fläche der Grundplatte angeordnet ist und sich um eine Vielzahl der Kanten der Grundplatte erstreckt; ein Batterietablett mit einer oberen und einer unteren Fläche mit einem Flanschabschnitt, der sich von einer oberen Fläche davon erstreckt, und einer Vielzahl von Kanten, wobei das Batterietablett auf einer oberen Fläche der Grundplatte angeordnet ist und eine Vielzahl von erhabenen Oberflächenmerkmalen auf der oberen Fläche aufweist, die einzelne Zellen umreißen, wobei jede Zelle so konfiguriert ist, dass sie mindestens eine Batterie aufnimmt; einen Deckel mit einer oberen und einer unteren Fläche, wobei der Deckel auf dem Flansch des Batterieträgers angeordnet ist; und wobei die externe Stützstruktur unterhalb des Flansches des Batterieträgers angeordnet ist und sich um eine Vielzahl der Kanten des Batterieträgers herum erstreckt.

Aus der US 10 513 295 B2 ist eine Fahrzeugunterteilstruktur bekannt, die Folgendes umfasst: ein Paar Schwellerbleche, wobei die Schwellerbleche in einer Fahrzeugbreitenrichtung voneinander getrennt sind und sich in einer Fahrzeugfront-Heck-Richtung erstrecken; einen Zwischenquerträger, der zwischen den Schwellerplatten angeordnet ist und sich in Richtung der Fahrzeugbreite erstreckt; ein Zwischenverbindungselement, das in einem Endabschnitt des Zwischenquerträgers in der Fahrzeugbreitenrichtung angeordnet ist und mit einem ersten Kontaktabschnitt, der mit der Schwellerplatte in Kontakt ist, und einem zweiten Kontaktabschnitt, der mit dem Zwischenquerträger in Kontakt ist, versehen ist; einem ersten Klebeabschnitt, der den ersten Kontaktabschnitt mit dem Schwellerblech verbindet; und einen zweiten Klebeabschnitt, der den zweiten Kontaktabschnitt mit dem Zwischenquerträger verbindet.

Die US 11 312 220 B2 zeigt eine Befestigungsstruktur für die Batterieeinheit eines Elektrofahrzeugs, umfassend: eine Bodenplatte; ein Paar rechter und linker Bodenrahmen, die unter der Bodenplatte vorgesehen sind, wobei jeder von ihnen einen geschlossenen Querschnitt bildet, der sich in Längsrichtung zusammen mit der Bodenplatte erstreckt; und eine Batterieeinheit, die ein Batteriemodul trägt und an dem Paar von Bodenrahmen angebracht ist, wobei die Batterieeinheit das Batteriemodul, ein Paar von rechten und linken Seitenrahmen, die an dem Paar von Bodenrahmen montiert sind, und ein Paar von vorderen und hinteren Modulhaltemechanismen umfasst, die ein Paar von vorderen und hinteren Querrahmen umfassen, die sich jeweils in einer Fahrzeugbreitenrichtung erstrecken und das Paar von Seitenrahmen miteinander verbinden und einen vorderen Endabschnitt und einen hinteren Endabschnitt des Batteriemoduls halten, und die Biegesteifigkeit des Modulträgermechanismus in einer vertikalen Richtung niedriger als die des Seitenrahmens eingestellt ist.

Aus der US 2004/035617 A1 ist ein elektrisch angetriebenes Fahrzeug bekannt, umfassend ein Fahrgestell, das ein Batteriemodulfach definiert; und ein Batteriemodul, das in das Batteriemodulfach des Fahrgestells eingesetzt werden kann.

### Zusammenfassung der Erfindung

Es ist eine Aufgabe der Erfindung, ein Kraftfahrzeug umfassend eine Tragstruktur und eine Hochvoltbatterie anzugeben, wobei die Hochvoltbatterie platzsparend im Kraftfahrzeug angeordnet ist, und wobei eine einfache und kostengünstige Fertigung möglich ist.

Die Lösung der Aufgabe erfolgt durch ein Kraftfahrzeug mit den Merkmalen gemäß Anspruch 1.

Das Kraftfahrzeug umfasst eine Tragstruktur, wobei die Tragstruktur zumindest zwei Längsträger und zumindest zwei Querträger umfasst, und umfasst ferner eine Hochvoltbatterie in einem Batteriegehäuse, wobei die Hochvoltbatterie in einem Raum angeordnet ist, der von den Längsträgern und den Querträgern begrenzt ist, wobei ein Batterierahmenring einstückig die radial innen liegenden Abschnitte der beiden Längsträger und der beiden Querträger bildet, wobei der Batterierahmenring zusätzlich zu seiner Funktion als Teil der Tragstruktur, einen Teil des Batteriegehäuses für die Hochvoltbatterie ausbildet.

Erfindungsgemäß ist eine Hochvoltbatterie in dem Raum zwischen seitlichen Längsträgern, insbesondere Schwellern, und vorne und hinten begrenzenden Querträgern angeordnet. Radial innen liegende Teile der Längsträger und der Querträger werden gleichzeitig als Teil des Batteriegehäuses genutzt, so dass das ringförmige Bauteil, nämlich der "Batterierahmenring", eine Doppelfunktion einnimmt und Platz und Kosten, die sonst für die zwei Bauteile benötigt werden, eingespart wird. Erfindungsgemäß bildet das doppelt genutzte Bauteil einen einteiligen Ring aus, nämlich den "Batterierahmenring". Ein einteiliger Ring, nämlich der "Batterierahmenring", vereinigt somit Teile der Rahmenstruktur als auch des Batteriegehäuses. Aufwändige Fügeprozesse von Tragstrukturteilen aneinander, um die rundum geschlossene Seitenfläche des Batteriegehäuses auszubilden, können somit entfallen.

Durch einen solchen einteiligen Batterierahmenring kann die Fertigung und insbesondere eine dichte Verbindung zu einem Batteriedeckel und/oder Batterieboden und/oder zu anderen Teilen der Tragstruktur wesentlich einfacher und kostengünstiger erfolgen. In der Produktion können viele Arbeitsschritte und Gewicht eingespart werden und die Dichtheit des späteren Batterieraumes verbessert werden.

Wenn ein Teil des Batteriegehäuses von einer konventionellen Leiterrahmenstruktur gebildet würde, müsste das Teil, dass das Batteriegehäuse mitausbildet, mit anderen Bauteilen über aufwändige Lichtbogen-Schmelzweißverfahren verbunden werden. In weiteren aufwendigen Arbeitsschritten würden danach die Verbindungsnähte glattgeschliffen werden müssen, um möglichst optimale Dichtflächen für den oberen und unteren Batteriegehäusedeckel herzustellen. Der obere Batteriegehäusedeckel müsste mittels einer Dichtung bzw. Dichtungsmasse beispielsweise auf eine oberen Flanschfläche eines lackierten Rahmens verschraubt werden. Ein solches Gehäuse müsste vor der Montage in ein Fahrzeug auf Dichtheit geprüft werden und im Falle einer Leckage repariert werden. Danach erst könnte der Rahmen unterhalb der Karosserie ins Fahrzeug montiert werden. Im Falle von später auftretenden Leckagen ist eine Reparatur sehr aufwendig, da die Karosserie angehoben bzw. demontiert werden müsste, um Zugängigkeit zu den Schrauben und zum oberen Batteriedeckel zu erhalten.

Mit der vorliegenden Erfindung wird es möglich, Teile der Rahmenstruktur eines Elektrofahrzeuges auch als Teil des Hochvolt- Batteriegehäuses zu nutzen. Die erforderlichen festen und dichten Verbindungen des Batteriegehäuses und der Tragstruktur können dabei einfach und kostengünstig hergestellt werden. Die Anzahl der Bauteile wird dabei reduziert und somit Masse und Kosten gespart. Des Weiteren wird durch diese Lösung auch Bauraum gespart, da doppelte Wände entfallen.

Die Bezeichnungen "oben" und "unten" in dieser Schrift beziehen sich auf die übliche Lage eines Kraftfahrzeuges und die Fahrzeug-z-Richtung, so dass "oben" in z-Richtung weiter von der Fahrbahn entfernt ist und "unten" in z-Richtung näher zur Fahrbahn liegt als oben.

Bevorzugt ist der Batterierahmenring ein Tiefziehteil.

Erfindungsgemäß ist der Batterierahmenring an seiner Oberseite mit einem Batteriegehäusedeckel gasdicht gefügt. Für dieses Fügen stehen verschiedene einfache und kostengünstige Verfahren zur Verfügung:
Der Batterierahmenring kann an seiner Oberseite mit dem Batteriegehäusedeckel bevorzugt mittels Laserschweißen, mittels Laserlöten, mittels Rollfalzen oder mittels Verschraubung mit Dichtung gefügt sein.

Erfindungsgemäß ist das ringförmige Bauteil, also der Batterierahmenring, an seiner Oberseite mit dem Batteriegehäusedeckel gasdicht abgeschlossen.

Der Batteriegehäusedeckel ist vorzugsweise ein einfaches, herkömmliches und bevorzugt im Wesentlichen ebenes Blech. Ein sonst vorhandener separater Batteriegehäusedeckel entfällt, da das hier als Batteriegehäusedeckel bezeichnete Bauteil erfindungsgemäß ein sonst den Fahrzeuginnenraum nach unten abschließendes Bodenbauteil ist, das gleichzeitig den Batteriegehäusedeckel ausbildet.

Bevorzugt wird das Batteriegehäuse an seiner Unterseite von einem Boden begrenzt, wobei der Boden bevorzugt einen Fahrzeugunterbodenabschluss bildet. Der Boden des Batteriegehäuses ist bevorzugt ein separates Bauteil und somit separat vom Batterierahmenring hergestellt.

Vorzugsweise umfassen die Längsträger und/oder die Querträger zusätzlich zu dem Batterierahmenring zumindest ein oder mehrere Blechschalen, die mit dem Batterierahmenring gefügt sind, um die Längsträger und/oder die Querträger auszubilden. Die Tragstruktur ist bevorzugt in Blechschalenbauweise ausgebildet. Die Längsträger und/oder die Querträger können, zusätzlich zu dem "Batterierahmenring", auch aus einem oder mehreren Profilen bzw. Hohlprofilen, beispielsweise Strangpressprofilen, hergestellt sein, die eine oder mehrere Kammern aufweisen bzw. die durch entsprechende Stege verbunden sind. Auch in einer solchen Bauweise können die Profile durch das Vorhandensein bzw. die Verbindung mit dem Batterierahmenring entsprechend leichter bzw. entsprechend weniger steif ausgeführt sein, da in Kombination mit dem Batterierahmenring die erforderliche Steifigkeit der Karosserie erzeugt wird.

### Kurzbeschreibung der Zeichnungen

Die Erfindung wird im Folgenden beispielhaft unter Bezugnahme auf die Zeichnungen beschrieben.
- Fig. 1: ist eine teilweise Schnittansicht einer Tragstruktur und eines Batterierahmens eines nicht erfindungsgemäßen Kraftfahrzeugs.
- Fig. 2: ist eine teilweise Schnittansicht gemäß Fig. 1, jedoch einer Tragstruktur und eines Batterierahmens eines erfindungsgemäßen Kraftfahrzeugs.
- Fig. 3: ist eine dreidimensionale Explosionsdarstellung der Tragstruktur und des Batterierahmens eines erfindungsgemäßen Kraftfahrzeugs.
- Fig. 4: ist eine Detaildarstellung des Verbindungsbereiches Batteriedeckel zu Batterierahmenring, entsprechend der Fig. 2 Detaildarstellung oben.
- Fig. 5: ist eine Detaildarstellung des Verbindungsbereiches entsprechend Fig. 4 in einer weiteren Ausführungsform.
- Fig. 6: ist eine Detaildarstellung des Verbindungsbereiches entsprechend Fig. 4 in einer weiteren Ausführungsform.

### Detaillierte Beschreibung der Erfindung

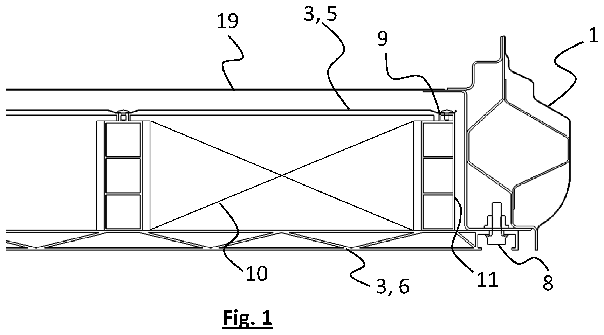

In Fig. 1 ist die Tragstruktur und der Batterierahmens eines nicht erfindungsgemäßen Kraftfahrzeugs ausschnittsweise dargestellt.

Das Kraftfahrzeug weist eine Tragstruktur auf mit einem Schweller, also einem seitlichen Längsträger 1, der als Hohlprofil ausgebildet ist. Über ein Befestigungsmittel 8, wie eine Schraube, ist der Boden 6 eines Batteriegehäuses 3 an dem Längsträger 1 befestigt. Mit dem Boden 6 dicht gefügt ist ein Batteriegehäusedeckel 5, der seitlich über Batteriestrukturen 11, wie Trennwänden, die als Seitenwände des Batteriegehäuses dienen, mit dem Boden verbunden sind. Alternativ kann der Batteriegehäusedeckel 5 auch nach unten zum Boden 6 hin verlaufen und eine Seitenwand des Batteriegehäuses 3 ausbilden. Die Seitenwand des Batteriegehäuses 3 ist in beiden Fällen von dem Längsträger 1 beabstandet. Zwischen Boden 6 und Batteriegehäusedeckel 5 ist eine Dichtung 9 angeordnet. Im Inneren des Batteriegehäuses 3 sind Batteriezellen 10 angeordnet.

Parallel zum Batteriegehäusedeckel 5 und getrennt von diesem ist oberhalb des Batteriegehäusedeckels 5 ein den Innenraum des Kraftfahrzeugs nach unten abschließendes Bodenbauteil 19 angeordnet.

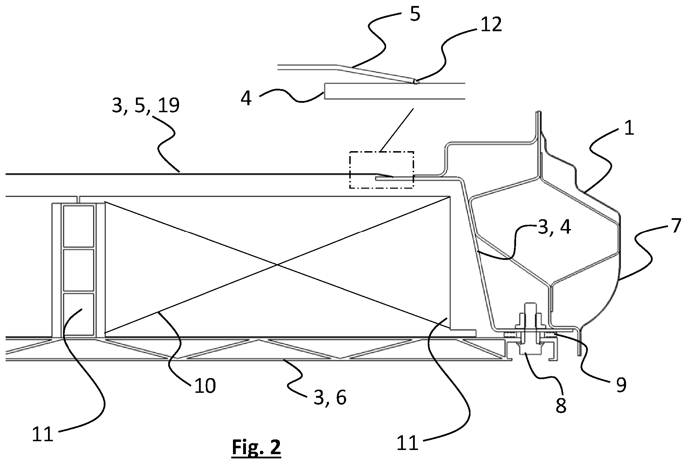

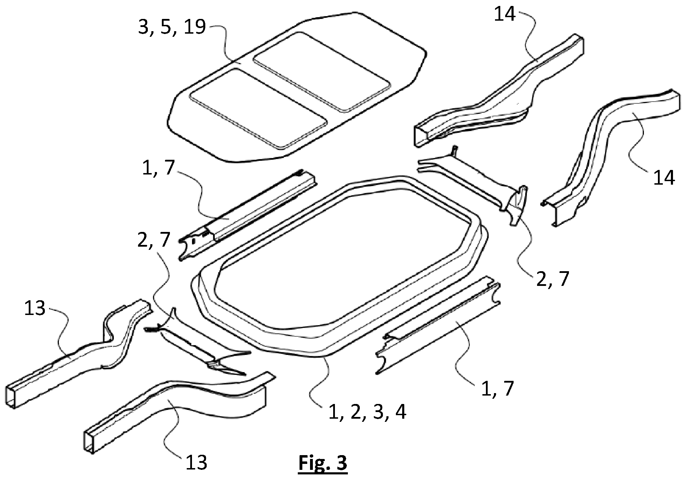

Ein erfindungsgemäßes Kraftfahrzeug ist in Fig. 2 und Fig. 3 dargestellt und zeigt eine Tragstruktur, wobei die Tragstruktur zwei seitliche Längsträger 1, nämlich Schweller, zwischen zwei Querträgern 2 umfasst, sowie zwei vordere Längsträger 13 und zwei hintere Längsträger 14, die vor einem vorderen Querträger 2 bzw. hinter einem hinteren Querträger 2 angeordnet sind.

Das Kraftfahrzeug umfasst auch eine Hochvoltbatterie in einem Batteriegehäuse 3, wobei die Hochvoltbatterie in dem Raum angeordnet ist, der von den Längsträgern 1 und von den Querträgern 2 begrenzt ist.

Wie in Fig. 2 und 3 ersichtlich, ist ein seitlicher Abschnitt des Längsträgers 1, also eine Seitenwand des Längsträgers 1, durch einen Batterierahmenring 4, insbesondere ein Tiefziehteil, gebildet. Dieser Batterierahmenring 4 bildet, zusätzlich zu seiner Funktion als Teil der Tragstruktur, einen Teil des Batteriegehäuses 3 für die Hochvoltbatterie aus, nämlich eine Seitenwand des Batteriegehäuses 3.

Wie in Fig. 3 gut ersichtlich, können die radial innen liegende Abschnitte der zwei Längsträger 1 und der zwei Querträger 2 einstückig durch den Batterierahmenring 4 ausgebildet werden, so dass der Batterierahmenring 4 einen umlaufenden Ring bildet, der alle Seitenwände des Batteriegehäuses 3 bildet. "Radial innen liegend" bezieht sich dabei auf die Form dieses Ringes, des Batterierahmenrings und somit des Ringes der durch die Längs- und Querträger gebildet wird und meint somit, näher am Mittelpunkt dieses Ringes.

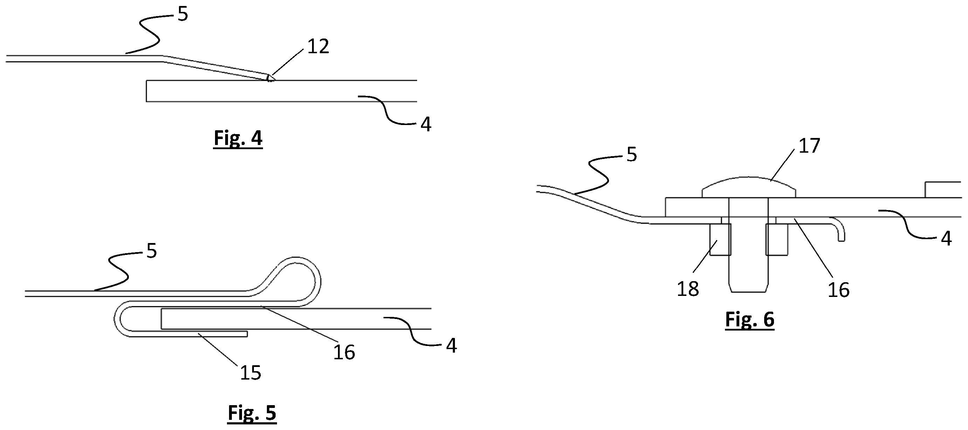

Der Batterierahmenring 4 ist an seiner Oberseite mit einem Batteriegehäusedeckel 5 dicht gefügt. Wie in der Detailvergrößerung der Fig. 2, sowie in der Fig. 4, ersichtlich, kann der Batteriegehäusedeckel 5 durch eine einfache Laserschweißnaht 12 oder eine Laserlötnaht mit dem Tiefziehteil, nämlich dem Batterierahmenring 4, gefügt sein. Der Batterierahmenring, ist an seiner Oberseite mit dem Batteriegehäusedeckel 5 gasdicht abgeschlossen. Der Batteriegehäusedeckel 5 ist ein einfaches, übliches Blech. Der Batteriegehäusedeckel 5 ist im Wesentlichen flach ausgebildet und bildet nicht die Seitenwände des Batteriegehäuses aus. Der Batteriegehäusedeckel 5 bildet gleichzeitig ein Bodenbauteil 19 aus, dass den Innenraum des Kraftfahrzeugs nach unten abschließt.

Weitere Alternativen zum Fügen von Batterierahmenring 4 und Batteriegehäusedeckel 5, der ebenfalls den Bodenbauteil 19 ausbilden kann, sind in Fig. 5 und Fig. 6 dargestellt. Fig. 5 zeigt eine Verbindung des Batteriegehäusedeckel 5 mittels Rollfalzen. Dabei ist bevorzugt ein Rollfalz-Flansch 15 an einem Rand des Batterierahmenrings 4 befestigt, insbesondere der Rand des Batterierahmenrings 4 in den Rollfalz-Flansch 15 geklemmt. Zwischen dem Rollfalz-Flansch 15 und dem Batterierahmenring 4 befindet sich bevorzugt ein Dicht- und/oder Klebstoff 16. Fig. 16 zeigt eine Verbindung des Batteriegehäusedeckel 5 mittels Verschraubung. Dabei ist eine Schraube 17 mit einem Schraubkopf durch Schraubbohrungen im Batterierahmenring 4 und im Batteriegehäusedeckel 5 gesteckt und mittels Mutter 18 geschlossen. Wiederum kann ein Dicht- und/oder Klebstoff 16 zwischen dem Batteriegehäusedeckel 5 und dem Batterierahmenring 4 aufgebracht sein.

Eine Dichtung 9 dichtet zwischen einem Boden 6 des Batteriegehäuses 3 und dem Batterierahmenring 4 ab. Der Batterierahmenring 4 kann über ein Befestigungsmittel 8, wie eine Schraube, am Boden 6 befestigt sein. Der Boden 6 bildet einen Fahrzeugunterbodenabschluss.

Die Längsträger 1 umfassen zusätzlich zu dem Batterierahmenring 4 noch weitere Blechschalen 7, die mit dem Batterierahmenring 4 gefügt sind, um die Längsträger auszubilden, insbesondere weitere Seitenwände oder Versteifungen des Längsträgers 1.

Bei dieser Erfindung können Schweißverbindungen an jenem Rahmenbauteil, welcher zugleich einen Teil des Batteriegehäuses 3 bildet, entfallen, da es aus einem einteiligen Batterierahmenring, insbesondere Tiefziehblech, hergestellt wird. Dieser Bauteil wird "Batterierahmenring" genannt. Da es hier keine unregelmäßigen Verbindungsschweißnähte gibt, sind keine aufwändigen Schleifarbeiten notwendig.

Für den obere Batteriegehäusedeckel 5, der die Abdeckung zum Unterboden der Karosserie, also das Bodenbauteil 19, bildet, sind vier vorteilhafte Verbindungsvarianten zwischen Batterierahmenring 4 und Batteriegehäusedeckel 5 angegeben. Je nach Materialpaarung zwischen den Komponenten, kann der Deckel 5 mittels Laserschweißen, Laserlöten, Rollfalzen oder Schrauben mit Dichtung mit dem Batterierahmenring 4 verbunden werden.

Der Batterierahmenring 4 kann vorzugsweise entweder aus einer einteiligen Blechplatine oder aus einem Tailor-Welded-Blank tiefgezogen sein. Des Weiteren kann der Batterierahmenring bei Leichtbaufahrzeugen auch als einteiliger Aluminium- Guss- Bauteil ausgeführt werden. Er bildet einerseits einen Teil der Rahmenstruktur, also der Tragstruktur, eines Kraftfahrzeugs und bildet des Weiteren einen Teil des Batteriegehäuses 3. Die Materialauswahl des Batterierahmenrings 4 wird hinsichtlich der Anforderungen des Fahrzeuges gewählt und kann sich vom Material als auch von den Materialwandstärken vom oberen Batteriedeckel 5 unterscheiden. Aus diesem Grund wird die Verbindung des obere Batteriegehäusedeckels 5 zum Batterierahmenring 4 mit unterschiedlichen Verbindungstechniken ausgeführt. Je nach Materialpaarung zwischen den Komponenten, kann der Deckel 5 mittels Laserschweißen, Laserlöten, Rollfalzen oder Verschraubung mit Dichtung mit dem Batterierahmenring 4 verbunden werden. Die weitere Rahmenstruktur des Leiterrahmens oder der Karosserie wird rund um den Batterierahmenring 4 in mehreren Fügeschritten aufgebaut.

### Bezugszeichenliste

- 1: Längsträger
- 2: Querträger
- 3: Batteriegehäuse
- 4: Tiefziehteil
- 5: Batteriegehäusedeckel
- 6: Boden
- 7: Blechschale
- 8: Befestigungsmittel
- 9: Dichtung
- 10: Batteriezellen
- 11: Batteriestrukturen
- 12: Laserschweißnaht
- 13: vordere Längsträger
- 14: hintere Längsträger
- 15: Rollfalz-Flansch
- 16: Dicht- und/oder Klebstoff
- 17: Schraube
- 18: Mutter
- 19: Bodenbauteil

## Patentansprüche

1. Kraftfahrzeug umfassend eine Tragstruktur (1, 2), wobei die Tragstruktur (1, 2) zumindest zwei Längsträger (1) und zumindest zwei Querträger (2) umfasst, ferner umfassend eine Hochvoltbatterie in einem Batteriegehäuse (3), wobei die Hochvoltbatterie in einem Raum angeordnet ist, der von den Längsträgern (1) und den Querträgern (2) begrenzt ist,
wobei ein Batterierahmenring (4) einstückig die radial innen liegenden Abschnitte der beiden Längsträger (1) und der beiden Querträger (2) bildet, wobei der Batterierahmenring (4) zusätzlich zu seiner Funktion als Teil der Tragstruktur (1, 2), einen Teil des Batteriegehäuses (3) für die Hochvoltbatterie ausbildet, **dadurch gekennzeichnet, dass** der Batterierahmenring (4) an seiner Oberseite mit einem Batteriegehäusedeckel (5) gasdicht gefügt ist, wobei der Batteriegehäusedeckel (5) durch ein den Innenraum des Kraftfahrzeugs nach unten abschließendes Bodenbauteil (19) ausgebildet ist.

2. Kraftfahrzeug nach Anspruch 1,
**dadurch gekennzeichnet, dass** der Batterierahmenring (4) an seiner Oberseite mit dem Batteriegehäusedeckel (5) mittels Laserschweißen, mittels Laserlöten, mittels Rollfalzen oder mittels Verschraubung mit Dichtung gefügt ist.

3. Kraftfahrzeug nach zumindest einem der vorhergehenden Ansprüche,
**dadurch gekennzeichnet, dass** der Batteriegehäusedeckel (5) ein einfaches, im Wesentlichen ebenes, Blech ist.

4. Kraftfahrzeug nach zumindest einem der vorhergehenden Ansprüche,
**dadurch gekennzeichnet, dass** das Batteriegehäuse (3) an seiner Unterseite von einem Boden (6) begrenzt wird, wobei der Boden (6) bevorzugt einen Fahrzeugunterbodenabschluss bildet.

5. Kraftfahrzeug nach zumindest einem der vorhergehenden Ansprüche,
**dadurch gekennzeichnet, dass** die Längsträger (1) und/oder die Querträger (2) zusätzlich zu dem Batterierahmenring (4) zumindest ein oder mehrere Blechschalen (7) umfassen, die mit dem Batterierahmenring (4) gefügt sind, um die Längsträger (1) und/oder die Querträger (2) auszubilden.
